# EUROPÄISCHE PATENTSCHRIFT

(11) **EP 1 560 155 B1**
(45) Veröffentlichungstag und Bekanntmachung des Hinweises auf die Patenterteilung: **18.03.2009**
(21) Anmeldenummer: 04002113.1
(22) Anmeldetag: 31.01.2004
(51) Int. Cl.: G06K 19/077

(54) **Verfahren zur Herstellung von kontaklosen Chip-Karten**
Manufacturing method for non-contact chip cards
Procédé de fabrication pour cartes à puce sans contact

(43) Veröffentlichungstag der Anmeldung: 03.08.2005
(73) Patentinhaber: Atlantic Zeiser GmbH, 78576 Emmingen (DE)
(72) Erfinder: Berndtsson, Anders, S-42934 Kullavik (SE)
(74) Vertreter: Kratzsch, Volkhard

(56) Entgegenhaltungen:
- WO-A-02/41387
- WO-A-02/089051
- US-A1- 2003 064 544
- US-A1- 2003 136 503
- US-A1- 2004 004 295

## Beschreibung

Die Erfindung bezieht sich auf ein Verfahren zur Herstellung von Informationsträgern, z. B. von Etiketten, Tickets od. dgl., insbesondere von kontaktlosen Informationsträgern, der im übrigen im Oberbegriff des Anspruchs 1 genannten Art. Ein derartiges Verfahren ergibt sich aus der US 2003/0136503 A1.

Bei der Herstellung solcher Informationsträger wird angestrebt, dies möglichst im kontinuierlichen Durchlauf wirtschaftlich effektiv mit großem Durchsatz pro Zeiteinheit zu bewerkstelligen, und dies vorzugsweise bei automatischer Betriebsweise.

Dies wird gemäß der Erfindung durch ein Verfahren mit den Merkmalen im Anspruch 1 erreicht. Vorteilhafte weitere Erfindungsmerkmale dazu und Ausgestaltungen ergeben sich aus den zugeordneten Unteransprüchen. Dieses Verfahren gemäß der Erfindung macht es möglich, Informationsträger, insbesondere kontaktlose Informationsträger, z. B. auch in kontinuierlichem Durchlauf unter Vermeidung taktweiser Vorgänge ökonomisch herzustellen und dabei eine sehr große Anzahl pro Zeiteinheit zu erzeugen.

Weitere Einzelheiten und Vorteile der Erfindung ergeben sich aus der nachfolgenden Beschreibung, auf die zur Vermeidung unnötiger Wiederholungen verwiesen wird.

Der vollständige Wortlaut der Ansprüche ist vorstehend allein zur Vermeidung unnötiger Wiederholungen nicht wiedergegeben, sondern statt dessen lediglich durch Hinweise auf die Ansprüche darauf Bezug genommen, wodurch jedoch alle diese Anspruchsmerkmale als an dieser Stelle ausdrücklich und erfindungswesentlich offenbart zu gelten haben.

Die Erfindung ist nachfolgend anhand von in den Zeichnungen gezeigten Ausführungsbeispielen näher erläutert. Es zeigen:
- Fig. 1: eine schematische Seitenansicht einer Einrichtung zur Herstellung von Informationsträgern,
- Fig. 2: eine schematische Seitenansicht einer Einzelheit II in Fig. 1 in demgegenüber größerem Maßstab,
- Fig. 3: eine schematische Seitenansicht in Pfeilrichtung III in Fig. 2 eines Teils der darin dargestellten Einzelheit;
- Fig. 4: eine schematische Draufsicht einer Antennen tragenden Bahn mit unterer Transportrolle für diese.

In den Zeichnungen ist schematisch eine Einrichtung 10 zur Herstellung von Informationsträgern 11 gezeigt, die z.B. aus Etiketten, Tickets, Fahrscheinen, Eintrittskarten od. dgl. und dabei aus verschiedenen Materialien bestehen können, z.B. aus Papier und/oder Kunststoff od. dgl. Bei diesen Informationsträgern 11 kann es sich mit Vorzug um kontaktlose lnformationsträger handeln, die nur schematisch dargestellte integrierte Schaltkreise 30 und mit letzteren verbundene Antennen 12, 13 aufweisen. Derartige Informationsträger 11 werden z. B. im kontinuierlichen Durchlauf mit dabei erreichter großer Durchsatzmenge mittels der Einrichtung 10 hergestellt, ausgehend von einer Bahn 14 aus Papier und/oder Kunststoff od. dgl. Material. Hierzu weist die Einrichtung 10 eine oder mehrere in Durchlaufrichtung der Bahn 14 gemäß Pfeil 15 z.B. hintereinander angeordnete Stationen oder Bearbeitungseinheiten auf, in denen jeweilige Behandlungen erfolgen. Die Bahn 14 besteht aus einem von einer Rolle 16 od. dgl. Speicher stammenden Bandmaterial, das z.B. zunächst mindestens einer Bearbeitungseinheit 17 zum Drucken, hiernach z.B. soweit erforderlich mindestens einer nachfolgenden Bearbeitungseinheit 18 zum Trocknen oder Härten und hiernach z.B. mindestens einer Prüfeinheit 19 zugeführt wird, der z.B. mindestens eine Bearbeitungseinheit 20 zum Verzinnen oder Aufbringen eines Klebstoffes folgt, an die sich z.B. mindestens eine Bearbeitungseinheit 21 zum Aufbringen von integrierten Schaltkreisen 30 (ICs) anschließt. Hiernach folgt z.B. mindestens eine Bearbeitungseinheit 22 zur Herstellung elektrischer Verbindungen oder zum Härten eines leitenden Klebstoffs und hiernach z.B. mindestens eine weitere Bearbeitungseinheit 23 zum Aufbringen zumindest einer Deckschicht, an die sich z.B. mindestens eine weitere Bearbeitungseinheit 24 zur Kommunikation mit dem Chip, insbesondere zur Programmierung, Initialisierung oder Personalisierung, anschließt. Darauf folgt z.B. mindestens eine Bearbeitungseinheit 25 für eine ggf. vorzunehmende Oberflächenbearbeitung, an die sich z.B. mindestens eine Bearbeitungseinheit 26 zur Endverarbeitung der fertiggestellten Informationsträger 11 anschließt.

Es versteht sich, dass von den einzelnen Bearbeitungseinheiten 17 bis 26 nicht alle und diese auch nicht unbedingt in der aufgezeigten Reihenfolge hintereinander vorgesehen sein müssen. Sie können statt dessen z.B. in Transportrichtung des Bandes gemäß Pfeil 15 gesehen auch untereinander vertauscht platziert sein, soweit dies für den Prozessablauf erforderlich bzw. sinnvoll ist, oder auch separat und räumlich entfernt und/oder in anderen Einrichtungen integriert sein. Je nach Gestaltung kann auch die eine oder andere Bearbeitungseinheit entfallen. Auch kann die Einrichtung 10 mehrzügig gestaltet sein derart, dass je Station mehrere z.B. gleichartige oder auch unterschiedlich gestaltete Bearbeitungseinheiten nebeneinander platziert sind.

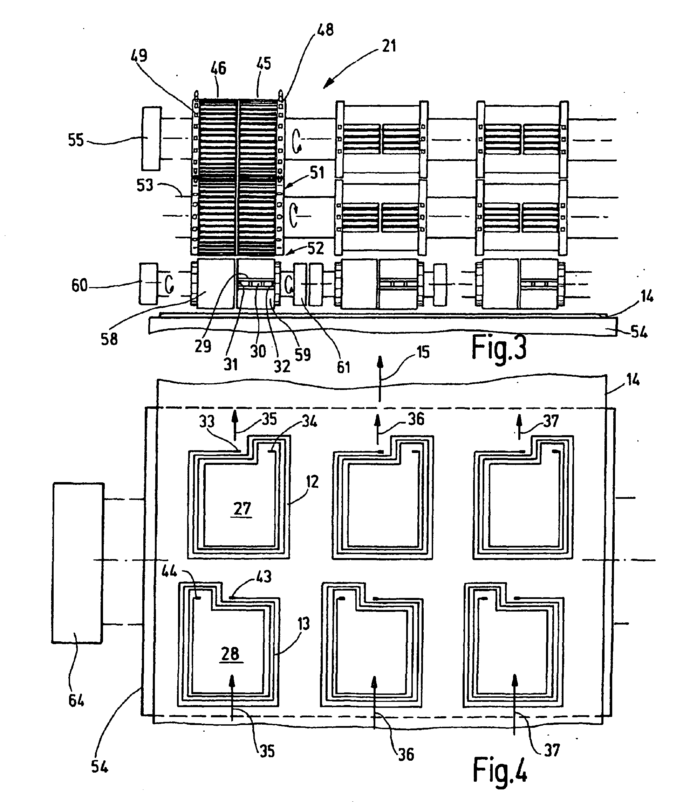

Die Einrichtung 10 mit den einzelnen Bearbeitungseinheiten 17 bis 26 ermöglicht die Herstellung von Informationsträgern 11, insbesondere von kontaktlosen Informationsträgern 11, die integrierte Schaltkreise (ICs) 30, insbesondere auch mit solchen ICs 30 versehene sog. Flip-Chip-Packages (FCPs) 29, und mit diesen verbundene Antennen 12, 13 aufweisen, wobei auf Flächenbereichen 27 bzw. 28 der Bahn 14 in Abständen hintereinander Antennen, wie in Fig. 4 für die Antennen 12 und 13 gezeigt ist, gebildet sind oder gebildet werden und ferner ein je Antenne 12, 13 vorgesehener IC 30 mit seinem Gehäuse, insbesondere FCP 29, elektrisch leitend mit zugeordneten Kontaktflächen der jeweiligen Antenne 12, 13 verbunden wird. In Fig. 3 ist schematisch ein in ein FCP 29 integrierter IC 30 gezeigt, dem die Antenne 12 in Fig. 4 zugeordnet ist und der beidseitig von dem in der Mitte befindlichen Schaltkreis (IC) 30 horizontal abgehende gesonderte Kontakte 31, 32 aufweist, die beim Aufbringen auf die Antenne 12 mit deren Kontaktflächen 33 bzw. 34 elektrisch leitend verbunden werden.

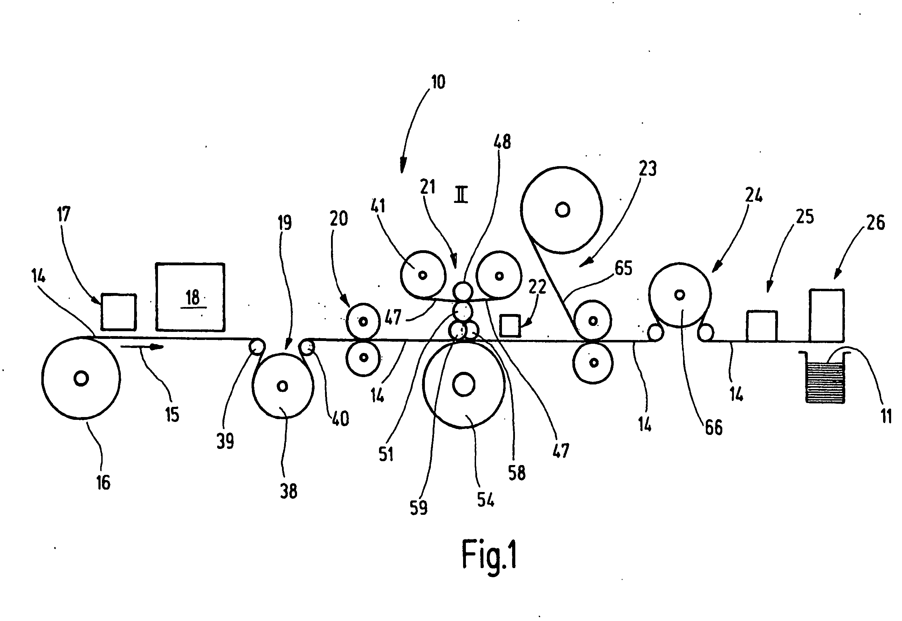

Bei diesem Herstellungsverfahren werden mit Hilfe der Einrichtung 10 auf der Bahn 14 zunächst die Antennen 12, 13 und weitere aufgebracht, und zwar z.B. durch Drucken, Prägen, Verlegen, Übertragen von einem Träger od. dgl. Als eine Möglichkeit ist in Fig. 1 diejenige mittels der mindestens einen Bearbeitungseinheit 17 durch Drucken gezeigt. Die mindestens eine Bearbeitungseinheit 17 kann dabei so gestaltet sein, dass die Antennen 12, 13 und weitere durch Drucken mit leitender Tinte z. B. im sog. DoD-Verfahren (Drop-on-Demand-Verfahren) oder statt dessen durch Drucken im Siebdruckverfahren z.B. mit leitender Paste aufgebracht werden. Fig. 4 zeigt, dass dabei die Antennen 12, 13 und weitere in einer solchen Ausrichtung gebildet werden, bei der deren Kontaktflächen 33, 34 auf einer quer zur Transportrichtung gemäß Pfeil 15 der Bahn 15 verlaufenden Linie und in Abstand voneinander liegen. Gleiches ist auch hinsichtlich der anderen Kontaktflächen 43, 44 der in Pfeilrichtung 15 nächstfolgenden Antenne 13 der Fall. Die Antennen 12, 13 und weitere folgen in Transportrichtung der Bahn 14 in regelmäßigen gleich großen Abständen hintereinander längs mindestens einer Bahnspur, die hinsichtlich der Antennen 12, 13 in Fig. 4 schematisch mit 35 bezeichnet ist. Fig. 4 zeigt, dass auf der Bahn 14 in abwechselnder Folge Antennen 12 eines Antennenmusters und als nächstffolgende die Antenne 13 mit anderem Antennenmuster gebildet werden, und dies auf der einen Bahnspur 35. Die Antennen 12, 13 unterscheiden sich hinsichtlich der Anordnung der Kontaktflächen. Bei der Antenne 12 befindet sich die linke Kontaktfläche 33 etwa auf Höhe der eingezeichneten Bahnspur 35 und die andere Kontaktfläche 34 in horizontalem Abstand rechts der Bahnspur 35. Bei der nächstfolgenden Antenne 13 sind die Kontaktflächen 43, 44 z.B. spiegelbildlich angeordnet derart, dass die eine Kontaktfläche 43 etwa auf Höhe der eingezeichneten Bahnspur 35 verläuft und die andere Kontaktfläche 44 in Abstand links davon. In der Bearbeitungseinheit 17 werden also je Bahnspur 35 einander abwechselnd Antennen 12 des einen Antennenmusters und Antennen 13 des anderen Antennenmusters gebildet. Es werden also in stetem Wechsel diese beiden Antennenmuster auf der Bahn 14, und zwar der ersten Bahnspur 35 gebildet, insbesondere z.B. gedruckt. Dies hat später beim Versehen der einzelnen Antennen 12, 13 im Bereich der mindestens einen Bearbeitungseinheit 21 mit ICs 30, insbesondere in FCPs 29 integrierten ICs 30, den Vorteil, dass auf die Antenne 12 rechte FCPs 29 und auf die nächstfolgende Antenne 13 linke FCPs, und dies im stetigen Wechsel, im durchlaufenden Verfahren appliziert werden können.

Wie sich insbesondere aus Fig. 4 ergibt, werden mittels einer Bearbeitungseinheit 17 oder mehrerer nebeneinander platzierter Bearbeitungseinheiten 17 auf der Bahn 14 auf mehreren nebeneinander verlaufenden parallelen Bahnspuren 35, 36 und 37 Antennen entsprechend den Antennen 12, 13 und weitere der ersten Bahnspur 35 gebildet, insbesondere z.B. durch Drucken od. dgl. aufgebracht, wozu die Bahn 14 an der mindestens einen Bearbeitungseinheit 17 in Transportrichtung gemäß Pfeil 15 vorbeibewegt wird. Soweit erforderlich und/oder gewünscht, wird hiernach die Bahn 14, versehen mit den Antennen 12, 13 und weiteren der einzelnen Bahnspuren 35, 36 und 37, an mindestens einer Bearbeitungseinheit 18 zum Trocknen oder Härten der aufgebrachten Tinte, Paste od. dgl. vorbeibewegt, die z.B. als UV-Einheit ausgebildet sein kann. Diese mindestens eine Bearbeitungseinheit 18 kann je nach Gestaltung auch enger an die mindestens eine Bearbeitungseinheit 17 herangerückt sein oder mit dieser auch zusammengefasst sein.

Alternativ können auch z.B. auf Rollen gewickelte Bahnen 14 verarbeitet werden, die bereits mit Antennen 12, 13 versehen bereitgestellt werden.

Als nächstes kann die Prüfeinheit 19 folgen, die der elektrischen Funktionskontrolle der aufgebrachten Antennen 12, 13 und weitere dient, wozu die Bahn 14 mit den Antennen 12, 13 darauf an dieser mindestens einen Prüfeinheit 19 vorbeibewegt wird. Die Prüfeinheit 19 weist z.B. eine Trommel 38 mit vorgelagerten und nachgelagerten Umlenkrollen 39, 40 auf. Die mindestens eine Trommel 38 weist z.B. auf der Umfangsfläche Prüfkontakte, z.B. Messstifte, auf, die mit einer nicht weiter gezeigten Stromversorgungs- und Prüfeinrichtung zur Messung einzelner Kennwerte der Antennen 12, 13 und weitere, z.B. der Leitfähigkeit, der Induktivität od. dgl., in Verbindung stehen. Die Bahn 14 wird mit den Antennen 12, 13 und weitere darauf um die mindestens eine Trommel 38 herumgeführt, wobei die Prüfkontakte der Trommel 38 mit den Kontaktflächen 33, 34 sowie 43, 44 und weiteren der Antennen 12, 13 und weiteren in leitende Berührung gelangen, so dass automatisch die Funktionsprüfung der Antennen 12, 13 durchgeführt werden kann.

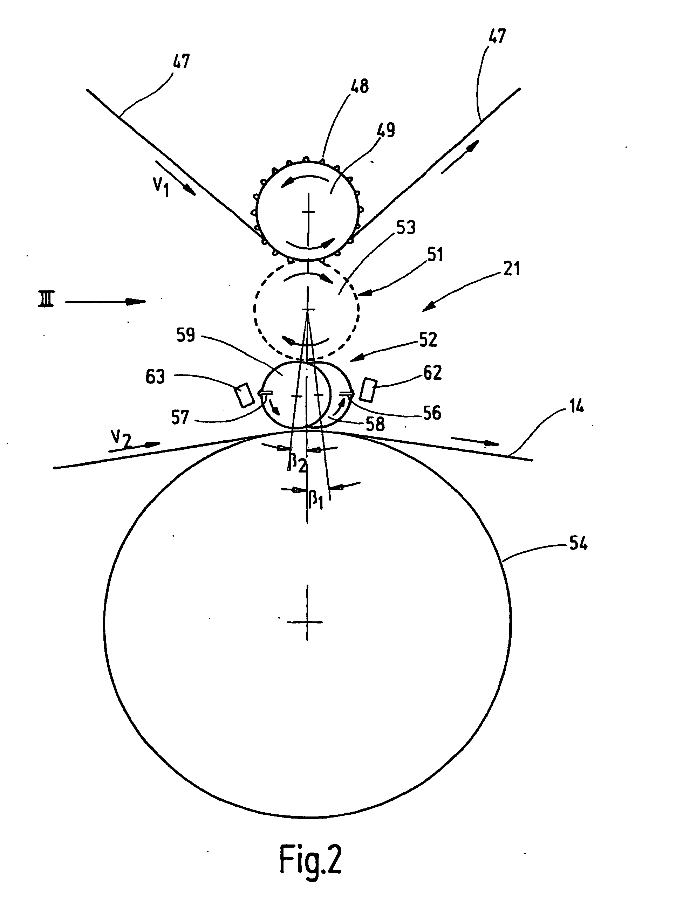

Anschließend kann die Bahn 14 mit den Antennen 12, 13 und weitere darauf der mindestens einen Bearbeitungseinheit 20 zugeführt werden, in der zumindest die Kontaktflächen 33, 34 sowie 43, 44 der Antennen 12, 13 für die Kontaktierung mit den Kontakten 31, 32 und weiteren der ICs 30, insbesondere integriert in FCPs 29, vorbereitet werden. Hierzu ist die mindestens eine Bearbeitungseinheit 20 z.B. zum Verzinnen der Kontaktflächen 33, 34 sowie 43, 44 der Antennen 12, 13 ausgebildet. Zusätzlich dazu oder statt dessen kann die mindestens eine Bearbeitungseinheit 20 auch zum Aufbringen eines leitenden oder anisotropen Klebstoffes auf die Kontaktflächen 33, 34 sowie 43, 44 der Antennen 12, 13 ausgebildet sein. In diesem Fall kann es von Vorteil sein, wenn die mindestens eine Bearbeitungseinheit 20 eine Einrichtung zum Aufbringen von Klebepunkten oder eine Trommel mit Klebepunktraster darauf aufweist. Die Bahn 14 kann in dieser Weise vorbereitet auch bereitgestellt werden. Sie wird nun der mindestens einen Bearbeitungseinheit 21 zugeführt, in der die Antennen 12, 13 mit ICs 30 herkömmlicher Art versehen werden können. Dabei werden die ICs in vorzugsweise regelmäßigen Abständen hintereinander folgend von einem Vorrat, z.B. einem Band, einer Kette, oder dergleichen Träger, zugeführt und auf die Bahn 14, und zwar im Bereich der Kontaktflächen der Antennen, abgegeben, wobei dies in kontinuierlichem oder diskontinuierlichem Durchlauf, z. B. taktweisem Durchlauf, geschieht. Beim gezeigten Ausführungsbeispiel hingegen können in der mindestens einen Bearbeitungseinheit 21 auf mindestens einer Rolle 41 bereitgestellte sog. Flip-Chip-Packages 29 (FCP) mit integrierten ICs 30 dergestalt verarbeitet werden, dass diese im kontinuierlichen Durchlauf auf die Bahn 14 im Bereich einer etwa quer zur Transportrichtung gemäß Pfeil 15 verlaufenden, die Kontaktflächen 33, 34 und 43, 44 jeweiliger Antennen 12 bzw. 13 aufweisenden Linie auf die Flächenbereiche 27 bzw. 28 im Bereich der Kontaktflächen 33, 34 und 43, 44 abgegeben werden. Für jede der Bahnspuren 35, 36 und 37 der Bahn 14 ist bei der Bearbeitungseinheit 21 eine mit derartigen FCPs 29 versehene Rolle 41 vorgesehen, wobei je Rolle 41 die FCPs 29 in vorzugsweise zwei parallelen, in Abstand nebeneinander verlaufenden Spuren vorliegen, die in Fig. 3 schematisch mit 45 und 46 für die erste Bahnspur 35 angedeutet sind. Eine Rolle 41 trägt somit in zwei Spuren 45, 46 nebeneinander angeordnete FCPs 29. Bei diesen FCPs 29 handelt es sich um solche, die einzeln in regelmäßigen Abständen je Spur 45, 46 hintereinanderfolgend an einem Transportstreifen 47 angeordnet sind und daran sowie untereinander mittels vorzugsweise rückseitig daran haftender Haltestreifen gehalten sind. Jeder in vorzugsweise zwei parallelen Spuren 45 und 46 angeordnete FCPs 29 tragende Transportstreifen 47 wird mittels mindestens einer zugeordneten Transporteinrichtung 48, insbesondere in Form einer Transporttrommel 49, umgelenkt, mittels der die einzelnen FCPs 29 durch Stanzen mittels eines Stanzwerkzeuges der Transporteinrichtung 48 vom Transportstreifen 47 und Haltestreifen abgetrennt werden dadurch, dass der Haltestreifen, der die einzelnen FCPs 29 untereinander und mit dem Transportstreifen 47 verbindet, quer zur Transportrichtung zerschnitten wird. Nach der Trennung vom Transportstreifen 47 und Haltestreifen werden die FCPs 29 unter Beibehaltung des jeweils gleichen Abstandes je Spur 45 und 46 voneinander von mindestens einer Zwischenhalteeinrichtung 51 übernommen und mittels mindestens einer damit zusammenwirkenden Übergabeeinrichtung 52 von der Zwischenhalteeinrichtung 51 abgenommen und auf die die Antennen 12, 13 und weitere tragende Bahn 14 übergeben. Die mindestens eine Zwischenhalteeinrichtung 51 weist z.B. analog der mindestens einen Transporteinrichtung 48 eine zweispurige Zwischentrommel 53 auf, die in gleicher Weise wie die Transporttrommel 49 zur Bildung der beiden Spuren 45, 46 jeweils zwei parallele, in Abstand nebeneinander verlaufende Umfangsflächen für zugeordnete zwei Spuren von FCPs 29 aufweist. Die Transporteinrichtung 48, insbesondere die einzelnen Transporttrommeln 49, weisen an beiden Umfangsrändern Vorsprünge, z.B. Stifte, auf, die in entsprechende Perforationsränder des Transportstreifens 47 eingreifen und gewünschtenfalls auch in Umfangsperforationen der jeweiligen Zwischentrommel 53 eingreifen können. Die mindestens eine Zwischenhalteeinrichtung 51, insbesondere Zwischentrommel 53, ist mit nicht weiter gezeigten Saugeinrichtungen zum Festhalten der einzelnen FCPs 29 auf dem Trommelumfang versehen, die von der Transporteinrichtung 48 übernommen werden. Die Saugeinrichtung ist durch Unterbrechungen des Umfangs der Zwischentrommel 53 angedeutet.In dieser Weise werden die FCPs 29 auf der Zwischentrommel 53 in gleichen Abständen voneinander auf den zwei Spuren 45, 46 sicher gehalten. Die mindestens eine Transporttrommel 49 und die mindestens eine Zwischentrommel 53 liegen mit ihren Zentren auf einer gemeinsamen, in Fig. 2 vertikal verlaufenden Verbindungslinie, wobei sie zumindest im wesentlichen in gegenseitigem Kontakt miteinander stehen. Beide werden mit gleicher Drehzahl gegensinnig zueinander angetrieben, wobei der Transportstreifen 47 zwischen beiden hindurchgeführt wird und die einzelnen FCPs 29 vom Transportstreifen 47 abgetrennt und auf die mindestens eine Zwischentrommel 53 übergeben und dort durch Saugwirkung gehalten werden. Die mindestens eine Transporteinrichtung 48, insbesondere Transporttrommel 49, wird mit der gleichen Geschwindigkeit v1 wie die mindestens eine Zwischenhalteeinrichtung 51, insbesondere Zwischentrommel 53, angetrieben. Die mindestens eine Bahn 14 wird in Abstand von der Transporteinrichtung 48 und Zwischenhalteeinrichtung 51, insbesondere unterhalb dieser, mittels eines nicht gezeigten Transportbandes oder mittels einer gezeigten Rolle 54 mit einer Geschwindigkeit v2 vorwärts bewegt, die größer, und zwar erheblich größer, ist als die Geschwindigkeit v1 der mindestens einen Zwischenhalteeinrichtung 51, insbesondere Zwischentrommel 53. Diese Geschwindigkeit v2 ist z.B. um den Faktor b größer als die Geschwindigkeit v1 der mindestens einen Zwischenhalteeinrichtung 51, wobei der Faktor b ermittelt wird aus dem Verhältnis der Abstände zweier Antennen 12 gleichen Antennenmusters voneinander auf einer Bahnspur 35 und dem Abstand der FCPs 29 auf dem Transportstreifen 47. Die mindestens eine Transporttrommel 49 und die mindestens eine Zwischentrommel 53 sind gemeinsam mittels eines Servomotors 55, insbesondere Schrittmotors, angetrieben.

In der mindestens einen Bearbeitungseinheit 21 werden somit die FCPs 29 fortlaufend nacheinander durch Durchtrennen des diese miteinander verbindenden und am Transportstreifen 47 haftenden Haltestreifens getrennt und jeweils auf die Bahn 14 im Bereich einer etwa quer zur Transportrichtung dieser verlaufenden, die Kontaktflächen 33, 34 und 43, 44 jeweiliger Antennen 12, 13 aufweisenden Linie abgegeben. Betrachtet man z.B. den in Fig. 3 auf der rechten Spur 45 bei der Übergabeeinrichtung 52 sichtbaren FCP 29, so wird dieser mit seinen Kontakten 31, 32 auf die Kontaktflächen 33, 34 der Antenne 12 gedrückt und mit diesen elektrisch leitend verbunden. Das Andrücken geschieht z.B. mittels nur in Fig. 2 angedeuteter Stifte, von denen je Spur 45, 46 zwei Stifte 57 bzw. 56 vorhanden sind. Beim herausgegriffenen Beispiel drücken zwei Stifte 57 der Übergabeeinrichtung 52 der rechten Spur 45 auf die Kontakte 31, 32 des FCP 29 und dadurch diese Kontakte auf die zugeordneten Kontaktflächen 33, 34 der Antenne 12. Die einzelnen FCPs 29 können mit ihren Kontakten 31, 32 auf den Kontaktflächen 33, 34 der Antennen 12 z.B. durch Bördeln, Löten, Schweißen, Kleben oder in sonstiger bekannter Weise befestigt werden. Die einzelnen FCPs 29 können verzinnte Kontakte 31, 32 aufweisen. Wenn ein FCP 29 von der Übergabeeinrichtung 52, rechte Spur 45, auf die Antenne 12 übergeben wird und die Kontaktierung bei den Kontaktflächen 33, 34 hergestellt wird, reichen die jeweiligen FCPs 29 brückenartig über den Wicklungsbereich der jeweiligen Antenne 12 hinweg.

Die Anordnung ist so getroffen, dass bei in zwei parallelen, in Abstand nebeneinander verlaufenden Spuren 45, 46 vorliegenden FCPs 29 und einer Bahnspur 35 mit von Antenne 12 zur nächstfolgenden Antenne 13 abwechselndem Antennenmuster mit Kontaktflächen in zeitlichem Abstand nacheinander eine Antenne 12 mit einem FCP 29 der einen Spur 45 und die nächstfolgende Antenne 13 mit einem FCP der anderen, in Fig. 3 linken Spur 46, und dies in stetem Wechsel, versehen werden. Dadurch wird erreicht, dass in kontinuierlichem Durchlauf ein FCP 29 einer Spur 45 mit seinen Kontakten 31, 32 mit den zugeordneten Kontaktflächen 33, 34 einer Antenne 12 eines Antennenmusters einer Bahnspur 35 und ein nächster FCP der anderen, in Fig. 3 linken Spur 46 mit seinen Kontakten mit den zugeordneten Kontaktflächen 43, 44 der nächstfolgenden Antenne 13 anderen Antennenmusters der gleichen Bahnspur 35 verbindbar sind.

Da die mindestens eine Zwischenhalteeinrichtung 51 mit v1 und damit mit geringerer Geschwindigkeit umläuft als dies der Geschwindigkeit v2 der Bahn 14 im Bereich der Rolle 54 entspricht, wird die mindestens eine Übergabeeinrichtung 52 nach der Übernahme eines FCP 29 von der zugeordneten Zwischenhalteeinrichtung 51 auf die Geschwindigkeit v2 beschleunigt, mit der die Bahn 14 in Transportrichtung 15 vorwärtsbewegt wird, und nach Abgabe eines FCP 29 auf die Bahn 14 wieder auf die Geschwindigkeit v1 der Zwischenhalteeinrichtung 51 verzögert. Die mindestens eine Übergabeeinrichtung 52 weist je Spur 45, 46 ein umlaufend angetriebenes Rad 59 bzw. 58 auf, das jeweils mit einer nicht weiter gezeigten Saugeinrichtung zum Festhalten der einzelnen von der Zwischenhalteeinrichtung 51 übernommenen FCPs 29 und außerdem an einer Umfangsstelle mit den jeweils zwei Stiften 57 bzw. 56 versehen ist, die z.B. nockengesteuert ausschiebbar sind und auf die Kontakte 31, 32 der FCPs 29 drücken und die FCPs 29 dadurch mit ihren Kontakten 31, 32 auf die jeweils zugeordnete Kontaktfläche 33, 34 der zugeordneten Antenne 12 drücken. Dadurch wird nur eine Punktbeaufschlagung der FCPs 29 erreicht und sichergestellt, dass etwaiger aufgebrachter Klebstoff nicht sonstige Bereiche der Einrichtung 10 verunreinigt. Ist z.B. zur Kontaktierung in der Bearbeitungseinheit 20 z.B. ein elektrisch leitender Klebstoff aufgebracht worden, so werden die Kontakte 31, 32 mittels der Stifte 57 bzw. 56 nur etwa punktförmig in den aufgebrachten Klebstoff gedrückt. Die Stifte 57, 56 bestehen z.B. aus Nadeln. Die Nockensteuerung für diese kann sich im Inneren des jeweiligen Rades 58, 59 befinden. Wie aus Fig. 2 ersichtlich ist, sind die beiden Stifte 57 des Rades 59 um etwa 180° Umfangswinkel gegenüber den Stiften 56 des anderen Rades 58 versetzt, betrachtet für den theoretischen Fall koaxialer Anordnung beider Räder 58, 59. Tatsächlich ist zumindest ein Rad 58, 59 der mindestens einen Übergabeeinrichtung 52 mit seiner Mittelachse in Bezug auf die Mittelachse der mindestens einen Zwischenhalteeinrichtung 51, insbesondere Zwischentrommel 53, um einen Winkel β1 bzw. β2 versetzt angeordnet. Bei vorgesehenen zwei Rädern 58, 59 ist z.B. das eine Rad 58 der Übergabeeinrichtung 52 mit seiner Mittelachse in Bezug auf die Mittelachse der Zwischenhalteeinrichtung 51, insbesondere Zwischentrommel 53, um einen Winkel β1 in Umfangsrichtung vorversetzt und das andere Rad 59 der Übergabeeinrichtung 52 mit seiner Mittelachse in Bezug auf die Mittelachse der Zwischenhalteeinrichtung 51, insbesondere Zwischentrommel 53, um einen Winkel β2 in Umfangsrichtung nachversetzt, derart, dass zunächst das eine Rad 58 einen FCP 29 der einen Spur 46 und in zeitlichem Abstand danach das andere Rad 59 einen FCP 29 der anderen Spur 45 von der Zwischenhalteeinrichtung 51 übernimmt.
Hinsichtlich des jeweiligen Versatzes der Räder 58, 59 ist der Versatzwinkel jedes Rades 58,59 der Übergabeeinrichtung 52 gleich groß gewählt. Er beträgt z.B. ein Viertel des Umfangsabstandes der FCPs 29 jeder Spur 45 bzw. 46 voneinander. Beträgt der Abstand der einzelnen FCPs 29 je Spur 45, 46 z.B. 9° Umfangswinkel, so ist der jeweilige Versatzwinkel β z.B. 2,25°.

Die mindestens eine Übergabeeinrichtung 52 mit den beiden Rädern 58, 59 macht es möglich, dass in kontinuierlichem Durchlauf von einem Rad 59 ein übernommener FCP 29 der einen Spur 45 auf die Antenne 12 eines Antennenmusters einer Bahnspur 35 und hiernach von dem anderen Rad 58 ein übernommener FCP 29 der anderen Spur 46 auf die nächstfolgende Antenne 13 anderen Antennenmusters der gleichen Bahnspur 35, und dies in abwechselnder Folge, übergeben wird. Bei kontinuierlichem Durchlauf werden also abwechselnd rechte und linke FCPs 29 appliziert, ohne dass hierbei der Transportstreifen 47, der die FCPs beider Spuren 45, 46 trägt, in Querrichtung abwechselnd hin und her geschaltet werden muss. Aufgrund des erreichten kontinuierlichen Durchlaufs sind für v2 große Geschwindigkeiten möglich, wodurch die Einrichtung 10 bei der Herstellung einzelner Informationsträger 11 einen sehr großen Durchsatz möglich macht. Die Räder 58, 59 der mindestens einen Übergabeeinrichtung 52 werden jeweils mittels voneinander unabhängigen, hinsichtlich ihrer Phasenlage synchronisierten, Servomotoren 60 bzw. 61, insbesondere Schrittmotoren, in jeweils gleicher Drehrichtung angetrieben, wobei die Umfangsgeschwindigkeiten um 180° zuzüglich des Versatzwinkels 2β phasenversetzt sind. Die Übergabe der FCPs 29 auf die Antennen 12, 13 einer Bahnspur 35 kann mittels mindestens einer Kamera 62,63 überwacht werden, von denen jede z.B. einer Bahnspur 45 bzw. 46 zugeordnet und etwa auf Höhe der Mitte des jeweiligen Rades 58,59 angeordnet sein kann. Alle Servomotoren 55, 60, 61 und weitere sind in Abhängigkeit von der Geschwindigkeit v2 der Bahn 14 gesteuert und mit dieser synchronisiert. Die Rolle 54 kann ebenfalls mittels eines Servomotors 64, insbesondere Schrittmotors, angetrieben sein.

Insbesondere aus Fig. 3 und 4 ist ersichtlich, dass eine zuvor für die eine Bahnspur 35 beschriebene Anordnung auch für beiden weiteren Bahnspuren 36 und 37 vorgesehen sein kann. Dabei können die zueinander parallelen Transporteinrichtungen 48 allesamt von einem einzigen Servomotor 55 mit der Geschwindigkeit v1 angetrieben werden, wobei auch die damit zusammenwirkenden, zueinander parallelen Zwischenhalteeinrichtungen 51 mit gleicher Geschwindigkeit angetrieben sind. Auch die jeweils zugeordneten zueinander parallelen Übergabeeinrichtungen 52 sind in gleicher Weise gestaltet und arbeiten in gleicher Weise, wie zuvor für diejenige der linken Bahnspur 35 beschrieben worden ist.

In Fig. 1 ist nur schematisch mindestens eine Bearbeitungseinheit 22 angedeutet, die es ermöglicht, dass die auf die Antennen 12, 13 einer Bahnspur 35 aufgebrachten ICs 30, insbesondere integriert in FCPs 29, mit ihren Kontakten 31, 32 mit den zugeordneten Kontaktflächen 33, 34 bzw. 43, 44 der jeweiligen Antennen 12, 13, soweit erforderlich, elektrisch leitend verbunden werden, z.B. durch Bördeln, Löten, Schweißen, Kleben oder in sonstiger bekannter Weise. Auch kann in dieser Bearbeitungseinheit 22 ein Härten eines elektrisch leitenden Klebers erfolgen.

Im Anschluss daran wird die die Antennen 12, 13 und weitere und aufgebrachten FCPs 29 tragende Bahn 14 an mindestens einer weiteren Bearbeitungseinheit 23 vorbeibewegt, in der zumindest eine Bahnseite, z. B. die Bahnoberseite und/oder -unterseite, zumindest deren die jeweiligen Antennen 12, 13 und ICs 30, insbesondere integriert in die FCPs 29, tragende Flächenbereiche 27, 28, mit mindestens einer ein- oder mehrschichtigen Deckschicht 65, z.B. einer oberen und/oder unteren Bahnlage, versehen wird. Eine oder mehrere Schichten der Deckschicht 65 können an der jeweiligen Stelle der ICs 30, insbesondere FCPs 29,ausgespart sein, wodurch die Gefahr einer etwaigen Beschädigung der ICs 30, insbesondere FCPs 29, beim Aufbringen vermieden ist und die ICs 30, insbesondere FCPs 29, zusätzlich geschützt sind. Die Deckschicht 65 kann z.B. durch Kleben an der Oberseite der Bahn 14 befestigt werden. Sie ist z.B. als Selbstklebeschicht ausgebildet.

Hiernach werden die einzelnen ICs 30, insbesondere integriert in die FCPs 29, auf der Bahn 14 durch Kommunikation zwischen diesen und mindestens einer nicht gezeigten Steuereinheit bearbeitet, z.B. initialisiert oder personalisiert. Dies geschieht in der mindestens einen Bearbeitungseinheit 24, die z.B. mindestens einen Träger mit Bogenbahn in Form einer umlaufend angetriebenen Trommel 66 aufweist, um die die Bahn 14 mit den ICs 30, insbesondere integriert in die FCPs 29, herumgeführt ist und dabei mit mindestens einem Kommunikationsmittel zur Bearbeitung, z.B. Initialisierung oder Personalisierung, in Verbindung steht. Die ICs 30, insbesondere integriert in die FCPs 29, werden während einer vorgegebenen, für die Bearbeitung ausreichenden Zeit und/oder Wegstrecke in bleibender Relativposition zu dem mindestens einen Kommunikationsmittel der Trommel 66 gehalten ohne Relativbewegung zueinander und während dieser Phase bearbeitet, z.B. initialisiert oder personalisiert.

Sofern gewünscht, wird anschließend die die Antennen 12, 13 und aufgebrachten ICs 30, insbesondere integriert in die FCPs 29, tragende Bahn 14 an mindestens einer weiteren Bearbeitungseinheit 25 vorbeibewegt, in der eine Oberflächenbearbeitung, insbesondere z.B. eine grafische Bearbeitung, erfolgt, z.B. mittels Bedrucken, Laserbearbeitung od.dergl. Im Anschluss daran wird die die Antennen 12, 13 und aufgebrachten ICs 30, insbesondere integriert in die FCPs 29, tragende Bahn 14 an mindestens einer weiteren Bearbeitungseinheit 26 vorbeibewegt, in der eine Endverarbeitung erfolgt, z.B. in Form von Aufwickeln und/oder Schneiden und/oder Bündeln und/oder Verpacken und/oder Banderolisieren od.dergl. Am Ende dieses Verfahrens ergeben sich die kontaktlosen Informationsträger 11, die mit hoher Geschwindigkeit in kontinuierlichem Durchlauf unter Erreichen sehr großer Stückzahlen pro Zeiteinheit mittels der Einrichtung 10 hergestellt werden können. Dabei macht es die Einrichtung möglich, auf zwei Spuren 45, 46 vorgesehene ICs 30, insbesondere integriert in FCPs 29, effektiv, schnell und in hohem Maße wirtschaftlich zu verarbeiten.

Mittels des erfindungsgemäßen Verfahrens können statt der FCPs 29 mit darin integrierten ICs 30 auch herkömmliche ICs 30 appliziert, mit den Antennen 12, 13 verbunden und in sonstiger Weise weiter verarbeitet werden.

## Patentansprüche

1. Verfahren zur Herstellung von Informationsträgern (11), z. B. von Etiketten, Tickets od. dgl., insbesondere von kontaktlosen Informationsträgern (11), die integrierte Schaltkreise (ICs, 30) und mit diesen verbundene Antennen (12, 13) aufweisen, wobei auf Flächenbereichen (27, 28) einer Bahn (14) längs mindestens einer Bahnspur (35, 36, 37) in regelmäßigen Abständen hintereinander folgend Antennen (12, 13) auf die Bahn (14) aufgebracht werden und ferner ein je Antenne (12, 13) vorgesehener IC (30) mit seinem Gehäuse oder seinen Kontakten (31, 32) elektrisch leitend mit zugeordneten Kontaktflächen (33, 34) der Antenne (12) verbunden wird
**dadurch gekennzeichnet,**
**dass** in abwechselnder Folge bei den Antennen (12, 13) einer Bahnspur (35) das Antennenmuster mit Kontaktflächen (33, 34) einer Antenne (12) verschieden vom Antennenmuster mit Kontaktflächen (43, 44) der in dieser Bahnspur (35) nächstfolgenden Antenne (13) ist, vorzugsweise spiegelbildlich dazu ist (Links-Rechts-Anordnung), dass als integrierte Schaltkreise (ICs, 30) in sog. Flip-Chip-Packages (FCPs,29) integrierte ICs (30), die mit gesonderten oder am Gehäuse vorgesehenen Kontakten (31, 32) versehen sind, vorgesehen sind, die einzeln in regelmäßigen Abständen hintereinander folgend an einem Transportstreifen (47) angeordnet und daran und untereinander mittels am Transportstreifen (47) haftender Haltestreifen in mindestens zwei parallelen, in Abstand nebeneinander verlaufenden Spuren (45, 46), gehalten sind, wobei die FCPs (29) fortlaufend nacheinander vom Transportstreifen (47) und Haltestreifen getrennt werden und nach der Trennung von mindestens einer Zwischenhalteeinrichtung (51) übernommen und mittels mindestens einer Übergabeeinrichtung (52) von der Zwischenhalteeinrichtung (51) abgenommen und jeweils im Bereich einer etwa quer zur Transportrichtung der Bahn (14) verlaufenden, die Kontaktflächen (33, 34 und 43, 44) jeweiliger Antennen (12, 13) aufweisenden Linie auf die die Antennen (12, 13) tragende Bahn (14) übergeben werden, dass die mindestens eine Übergabeeinrichtung (52) je Spur (45, 46) mit FCPs (29) ein umlaufend angetriebenes Rad (59 bzw. 58) aufweist und zumindest ein Rad (58, 59) der mindestens einen Übergabeeinrichtung mit seiner Mittelachse in Bezug auf die Mittelachse der Zwischenhalteeinrichtung (51) um einen Winkel β in Umfangsrichtung versetzt angeordnet ist.

2. Verfahren nach Anspruch 1,
**dadurch gekennzeichnet,**
**dass** die einzelnen ICs (30), integriert in Flip-Chip-Packages (FCPs,29), mittels auf deren Kontakte (31, 32) drückenden, ausschiebbaren und z. B. nockengesteuerten Stiften (56, 57) auf die Kontaktflächen (33, 34) der Antennen (12) gedrückt werden.

3. Verfahren nach Anspruch 1 oder 2,
**dadurch gekennzeichnet,**
**dass** bei mindestens in zwei parallelen, in Abstand nebeneinander verlaufenden Spuren (45, 46) vorliegenden FCPs (29) und mindestens einer Bahnspur (35) mit von Antenne (12) zur nächstfolgenden Antenne (13) abwechselndem Antennenmuster mit Kontaktflächen (33, 34 und 43, 44) kontinuierlich hintereinander eine Antenne (12) mit einem FCP (29) der einen Spur (45) und die nächstfolgende Antenne (13) mit einem FCP (29) der anderen Spur (46), und dies in stetem Wechsel, versehen werden.

4. Verfahren nach Anspruch 3,
**dadurch gekennzeichnet,**
**dass** in kontinuierlichem Durchlauf ein FCP (29) einer Spur (45) mit seinen Kontakten (31, 32) mit den zugeordneten Kontaktflächen (33, 34) einer Antenne (12) eines Antennenmusters einer Bahnspur (35) und ein nächster FCP (29) der anderen Spur (46) mit seinen Kontakten mit den zugeordneten Kontaktflächen (43, 44) der nächstfolgenden Antenne (13) anderen Antennenmusters der gleichen Bahnspur (35) verbindbar sind.

5. Verfahren nach einem der Ansprüche 1 bis 4,
**dadurch gekennzeichnet,**
**dass** die Transportstreifen (47) mit in vorzugsweise zwei parallelen Spuren (45, 46) angeordneten FCPs (29) mittels mindestens einer Transporteinrichtung (48), insbesondere Transporttrommel (49), umgelenkt und die FCPs (29) durch Stanzen mittels eines Stanzwerkzeuges der Transporteinrichtung (48) vom Haltestreifen und damit vom Transportstreifen (47) abgetrennt werden und von der mindestens einen Zwischenhalteeinrichtung (51) übernommen werden.

6. Verfahren nach Anspruch 1,
**dadurch gekennzeichnet,**
**dass** die mindestens eine Zwischenhalteeinrichtung (51) eine Zwischentrommel (53) aufweist, die mit Saugeinrichtungen zum Festhalten der einzelnen von der mindestens einen Transporteinrichtung (48) übernommenen FCPs (29) auf dem Trommelumfang versehen ist.

7. Verfahren nach Anspruch 6,
**dadurch gekennzeichnet,**
**dass** die mindestens eine Transporttrommel (49) und die mindestens eine Zwischentrommel (53) mit ihren Zentren auf einer gemeinsamen Verbindungslinie liegen und zumindest im wesentlichen miteinander in Kontakt stehen.

8. Verfahren nach Anspruch 6 oder 7,
**dadurch gekennzeichnet,**
**dass** die mindestens eine Transporttrommel (49) und die mindestens eine Zwischentrommel (53) mit gleicher Drehzahl gegensinnig zueinander umlaufen.

9. Verfahren nach einem der Ansprüche 6 bis 8,
**dadurch gekennzeichnet,**
**dass** die mindestens eine Transporttrommel (49) und die mindestens eine Zwischentrommel (53) jeweils zwei in Abstand nebeneinander verlaufende Umfangsflächen für zugeordnete zwei Spuren (45, 46) von FCPs (29) aufweisen.

10. Verfahren nach einem der Ansprüche 1 bis 9,
**dadurch gekennzeichnet,**
**dass** die mindestens eine Übergabeeinrichtung (52) nach der Übernahme eines FCPs (29) von der zugeordneten Zwischenhalteeinrichtung (51) auf eine höhere Geschwindigkeit v2 beschleunigt wird, mit der die Bahn (14) in Transportrichtung vorwärts bewegt wird, und nach Abgabe eines FCPs (29) auf die Bahn (14) wieder auf die niedrigere Geschwindigkeit v1 der mindestens einen Zwischenhalteeinrichtung (51) verzögert wird.

11. Verfahren nach einem der Ansprüche 1 bis 10,
**dadurch gekennzeichnet,**
**dass** jeweilige Rad (59 bzw. 58) der Übergabeeinrichtung (52) jeweils an einer Umfangsstelle mit einer Saugeinrichtung zum Festhalten der einzelnen von der Zwischenhalteeinrichtung (51) übernommenen FCPs (29) und zwei auf die Kontakte (31, 32) der FCPs (29) drückenden, ausschiebbaren und z. B. nockengesteuerten Stiften (56), (57) versehen ist, mittels denen die Kontakte (31, 32) der FCPs (29) auf die Kontaktflächen (33, 34 und 43, 44) der zugeordneten Antennen (12, 13) gedrückt werden.

12. Verfahren nach Anspruch 11,
**dadurch gekennzeichnet,**
**dass** die Stifte (56) des einen Rades (58) um etwa 180° Umfangswinkel gegenüber den Stiften (57) des anderen Rades (59) der mindestens einen Übergabeeinrichtung (52) versetzt sind.

13. Verfahren nach einem der Ansprüche 1 bis 12,
**dadurch gekennzeichnet,**
**dass** das eine Rad (58) der mindestens einen Übergabeeinrichtung (52) mit seiner Mittelachse in Bezug auf die Mittelachse der mindestens einen Zwischenhalteeinrichtung (51), insbesondere Zwischentrommel (53), um einen Winkel β1 in Umfangsrichtung vorversetzt ist und das andere Rad (59) der mindestens einen Übergabeeinrichtung (52) mit seiner Mittelachse in Bezug auf die Mittelachse der mindestens einen Zwischenhalteeinrichtung (51), insbesondere Zwischentrommel (53), um einen Winkel β2 in Umfangsrichtung nachversetzt ist, derart, dass abwechselnd zunächst das eine Rad (58) einen FCP (29) der einen Spur (46) und danach das andere Rad (59) einen FCP (29) der anderen Spur (45) von der Zwischenhalteeinrichtung (51) übernimmt.

14. Verfahren nach Anspruch 13,
**dadurch gekennzeichnet,**
**dass** der Versatzwinkel β jedes Rades (58, 59) der mindestens einen Übergabeeinrichtung (52) gleich groß ist.

15. Verfahren nach Anspruch 13 oder 14,
**dadurch gekennzeichnet,**
**dass** der Versatzwinkel β jedes Rades (58, 59) der mindestens einen Übergabeeinrichtung (52) zumindest etwa ein Viertel des Abstandes der FCPs (29) jeder Spur (45, 46) voneinander beträgt.

16. Verfahren nach einem der Ansprüche 1 bis 15,
**dadurch gekennzeichnet,**
**dass** in kontinuierlichem Durchlauf ein von einem Rad (58) der mindestens einen Übergabeeinrichtung (52) übernommener FCP (29) einer Spur (46) auf eine Antenne (13) eines Antennenmusters einer Bahnspur (35) und hiernach ein von dem anderen Rad (59) der Übergabeeinrichtung (52) übernommener FCP (29) der anderen Spur (45) auf eine nächstfolgende Antenne (12) anderen Antennenmusters der gleichen Bahnspur (35), und dies in abwechselnder Folge, übergeben wird.

17. Verfahren nach einem der Ansprüche 1 bis 16,
**dadurch gekennzeichnet,**
**dass** die Räder (58, 59) der mindestens einen Übergabeeinrichtung (52) mit Umfangsgeschwindigkeiten angetrieben werden, die um 180° zuzüglich des Versatzwinkels 2β zueinander phasenversetzt sind.

18. Verfahren nach einem der Ansprüche 5 bis 17,
**dadurch gekennzeichnet,**
**dass** die mindestens eine Transporteinrichtung (48), insbesondere Transporttrommel (49), mit der gleichen Geschwindigkeit v1 wie die mindestens eine Zwischenhalteeinrichtung (51), insbesondere Zwischentrommel (53), umläuft und angetrieben ist.

19. Verfahren nach einem der Ansprüche 1 bis 18,
**dadurch gekennzeichnet,**
**dass** die mindestens eine Bahn (14) mittels eines Transportbandes, einer Rolle (54) od. dgl. mit einer Geschwindigkeit v2 vorwärtsbewegt wird, die größer ist als die Geschwindigkeit v1 der mindestens einen Zwischenhalteeinrichtung (51), insbesondere Zwischentrommel (53).

20. Verfahren nach Anspruch 19,
**dadurch gekennzeichnet,**
**dass** die Geschwindigkeit v2 der mindestens einen Bahn (14) um den Faktor b größer ist als die Geschwindigkeit v1 der mindestens einen Zwischenhalteeinrichtung (51), wobei der Faktor b aus dem Verhältnis der Abstände zweier Antennen (12) gleichen Antennenmusters einer Bahnspur (35) und dem Abstand der FCPs (29) auf dem Transportstreifen (47) ermittelt wird.

21. Verfahren nach einem der Ansprüche 5 bis 20,
**dadurch gekennzeichnet,**
**dass** die mindestens eine Transporttrommel (49) und die mindestens eine Zwischentrommel (53) mittels eines Servomotors (55), insbesondere Schrittmotors, angetrieben sind.

22. verfahren nach einem der Ansprüche 1 bis 21,
**dadurch gekennzeichnet,**
**dass** die beiden Räder (58, 59) der mindestens einen Übergabeeinrichtung (52) jeweils mittels voneinander unabhängiger Servomotoren (60, 61), insbesondere Schrittmotoren, angetrieben sind, deren Phasenlage synchronisiert ist.

23. Verfahren nach Anspruch 21 oder 22,
**dadurch gekennzeichnet,**
**dass** alle Servomotoren (55, 60, 61) in Abhängigkeit von der Geschwindigkeit v2 der Bahn (14) gesteuert und mit dieser synchronisiert sind.

24. Verfahren nach einem der Ansprüche 1 bis 23,
**dadurch gekennzeichnet,**
**dass** die Übergabe der FCPs (29) auf die Antennen (12, 13) einer Bahnspur (35) mittels mindestens einer Kamera (62, 63) überwacht wird.

## Claims

1. Method for manufacturing information carriers (11), e.g. labels, tickets or the like, in particular non-contact information carriers (11) which have integrated circuits (IC, 30) and antennas (12, 13) connected to the latter, antennas (12, 13) following one another at regular intervals being applied to a web (14) on surface regions (27, 28) of the web (14) along at least one web track (35, 36, 37) and, in addition, an IC (30) provided for each antenna (12, 13) being connected electrically by its housing or its contacts (31, 32) to associated contact areas (33, 34) of the antenna (12),
**characterized**
**in that** in alternating sequence in the antennas (12, 13) of one web track (35), the antenna pattern having contact areas (33, 34) of one antenna (12) is different from the antenna pattern having contact areas (43, 44) of the next following antenna (13) in this web track (35), is preferably a mirror image thereof (left-right arrangement), in that as integrated circuits (ICs, 30) are provided ICs (30) integrated in what are known as flip chip packages (FCPs, 29), which are provided with separate contacts (31, 32) or contacts (31, 32) provided on the housing, which are arranged following after one another at regular intervals on a transport strip (47) and are held thereon and in relation to one another by means of holding strips adhering to the transport strip (47) in at least two parallel tracks (45, 46) running at a distance from one another, the FCPs (29) being separated continuously one after another from the transport strip (47) and holding strip and, following the separation, being picked up by at least one intermediate holding device (51) and being taken off the intermediate holding device (51) by means of at least one transfer device (52) and, in each case in the region of a line running approximately transversely with respect to the transport direction of the web (14) and having the respective contact areas (33, 34 and 43, 44) of respective antennas (12, 13), being transferred to the web (14) carrying the antennas (12, 13), in that the at least one transfer device (52) has, for each track (45, 46) having FCPs (29), a wheel (59 or 58) that is driven rotationally, and at least one wheel (58, 59) of the at least one transfer device being arranged with its central axis offset in relation to the central axis of the intermediate holding device (51) by an angle β in the circumferential direction.

2. Method according to Claim 1, **characterized in that** the individual ICs (30), integrated in flip chip packages (FCPs, 29), are pressed onto the contact areas (33, 34) of the antennas (12) by means of pins (56, 57) which press on their contacts (31, 32), can be pushed out and, for example, are cam controlled.

3. Method according to Claim 1 or 2, **characterized in that**, in the case of FCPs (29) present in two parallel tracks (45, 46) running beside each another at a distance and at least one web track (35) having an antenna pattern alternating from antenna (12) to the next following antenna (13) and having contact areas (33, 34 and 43, 44) continuously one after another, one antenna (12) is provided with an FCP (29) of the one track (45) and the next following antenna (13) is provided with an FCP (29) of the other track (46), and this alternates continuously.

4. Method according to Claim 3, **characterized in that**, in a continuous pass, one FCP (29) of one track (45) can be connected by its contacts (31, 32) to the associated contact areas (33, 34) of an antenna (12) of an antenna pattern of one web track (35), and a next FCP (29) of the other track (46) can be connected by its contacts to the associated contact areas (43, 44) of the next following antenna (13) of another antenna pattern of the same web track (35).

5. Method according to one of Claims 1 to 4,
**characterized in that** the transport strip (47) having FCPs (29) arranged in preferably two parallel tracks (45, 46) is deflected by means of at least one transport device (48), in particular transport drum (49), and the FCPs (29) are separated from the holding strip and therefore from the transport strip (47) by punching by means of a punching tool of the transport device (48), and are picked up by the at least one intermediate holding device (51).

6. Method according to Claim 1, **characterized in that** the at least one intermediate holding device (51) has an intermediate drum (53), which is provided with suction devices for holding firmly on the drum circumference the individual FCPs (29) picked up by the at least one transport device (48).

7. Method according to Claim 6, **characterized in that** the at least one transport drum (49) and the at least one intermediate drum (53) are located with their centres on a common connecting line and are at least substantially in contact with each another.

8. Method according to Claim 6 or 7, **characterized in that** the at least one transport drum (49) and the at least one intermediate drum (53) revolve at the same rotational speed in mutually opposite directions.

9. Method according to one of Claims 6 to 8, **characterized in that** the at least one transport drum (49) and the at least one intermediate drum (53) in each case have two circumferential areas running beside each other at a distance for two associated tracks (45, 46) of FCPs (29).

10. Method according to one of Claims 1 to 9, **characterized in that**, after an FCP (29) has been picked up by the associated intermediate holding device (51), the at least one transfer device (52) is accelerated to a higher speed v2, at which the web (14) is moved forward in the transport direction, and, after an FCP (29) has been deposited on the web (14), is decelerated again to the lower speed v1 of the at least one intermediate holding device (51).

11. Method according to one of Claims 1 to 10, **characterized in that** the respective wheel (59 or 58) of the transfer device (52) is in each case provided at a circumferential point with a suction device for holding firmly the individual FCPs (29) picked up by the intermediate holding device (51), and with two pins (56), (57) which press on the contacts (31, 32) of the FCPs (29), can be pushed out and, for example, are cam controlled, by means of which the contacts (31, 32) of the FCPs (29) are pressed onto the contact areas (33, 34 and 43, 44) of the associated antennas (12, 13).

12. Method according to Claim 11, **characterized in that** the pins (56) of one wheel (58) are offset by approximately 180° circumferential angle with respect to the pins (57) of the other wheel (59) of the at least one transfer device (52).

13. Method according to one of Claims 1 to 12, **characterized in that** the one wheel (58) of the at least one transfer device (52) is offset forward with its central axis in relation to the central axis of the at least one intermediate holding device (51), in particular intermediate drum (53), by an angle β1 in the circumferential direction, and the other wheel (59) of the at least one transfer device (52) is offset rearward with its central axis in relation to the central axis of the at least one intermediate holding device (51), in particular intermediate drum (53), by an angle β2 in the circumferential direction, in such a way that, alternately, firstly the one wheel (58) picks up an FCP (29) from the one track (46) and then the other wheel (59) picks up an FCP (29) from the other track (45) from the intermediate holding device (51).

14. Method according to Claim 13, **characterized in that** the angle of offset β of each wheel (58, 59) of the at least one transfer device (52) is equally large.

15. Method according to Claim 13 or 14, **characterized in that** the angle of offset β of each wheel (58, 59) of the at least one transfer device (52) is at least approximately one quarter of the distance of the FCPs (29) of each track (45, 46) from one another.

16. Method according to one of Claims 1 to 15, **characterized in that**, in a continuous pass, an FCP (29) picked up by one wheel (58) of the at least one transfer device (52) from one track (46) is transferred to an antenna (13) on an antenna pattern of a web track (35) and, after that, an FCP (29) picked up by the other wheel (59) of the transfer device (52) from the other track (45) is transferred to a next following antenna (12) of another antenna pattern of the same web track (35), and this in an alternating sequence.

17. Method according to one of Claims 1 to 16, **characterized in that** the wheels (58, 59) of the at least one transfer device (52) are driven at circumferential speeds which are phase-offset in relation to each other by 180° plus the angle of offset 2β.

18. Method according to one of Claims 5 to 17, **characterized in that** the at least one transport device (48), in particular transport drum (49), revolves and is driven at the same speed v1 as the at least one intermediate holding device (51), in particular intermediate drum (53).

19. Method according to one of Claims 1 to 18, **characterized in that** the at least one web (14) is moved forward by means of a transport belt, a roller (54) or the like at a speed v2 which is greater than the speed v1 of the at least one intermediate holding device (51), in particular intermediate drum (53).

20. Method according to Claim 19, **characterized in that** the speed v2 of the at least one web (14) is greater by a factor b than the speed v1 of the at least one intermediate holding device (51), the factor b being determined from the ratio of the spacings of two antennas (12) of the same antenna pattern of a web track (35) and the spacing of the FCPs (29) on the transport strip (47).

21. Method according to one of Claims 5 to 20, **characterized in that** the at least one transport drum (49) and the at least one intermediate drum (53) are driven by means of a servo motor (55), in particular stepping motor.

22. Method according to one of Claims 1 to 21, **characterized in that** the two wheels (58, 59) of the at least one transfer device (52) are in each case driven by means of mutually independent servo motors (60, 61), in particular stepping motors, whose phase angle is synchronised.

23. Method according to Claim 21 or 22, **characterized in that** all the servo motors (55, 60, 61) are controlled as a function of the speed v2 of the web (14) and are synchronised with the latter.

24. Method according to one of Claims 1 to 23, **characterized in that** the transfer of the FCPs (29) to the antennas (12, 13) of a web track (35) is monitored by means of at least one camera (62, 63).

## Revendications

1. Procédé pour fabriquer des supports d'information (11), par exemple des étiquettes, des tickets ou similaires, notamment des supports d'information sans contact (11), qui présentent des circuits intégrés (IC, 30) et des antennes (12, 13) reliées avec ceux-ci, les antennes (12, 13) étant appliquées sur des zones de surface (27, 28) d'une bande (14) le long d'au moins un tracé (35, 36, 37) en se suivant l'une derrière l'autre à intervalles réguliers sur la bande (14) et un IC (30), prévu pour chaque antenne (12, 13), étant relié de manière électriquement conductrice par son boîtier ou ses contacts (31, 32) avec des surfaces de contact (33, 34) associées de l'antenne (12), **caractérisé en ce que** dans une séquence alternée au niveau des antennes (12, 13) d'un tracé (35), le modèle d'antenne avec les surfaces de contact (33, 34) d'une antenne (12) est différent du modèle d'antenne avec les surfaces de contact (43, 44) de l'antenne suivante (13) dans ce tracé (35), de préférence inversé (disposition gauche/droite), **en ce que** les circuits intégrés (IC, 30) prévus sont des circuits intégrés IC (30) à boîtier dit Flip-Chip (FCP, 29) qui sont munis de contacts (31, 32) spéciaux ou prévus sur le boîtier, lesquels sont disposés sur une bande de transport (47) en se suivant l'un derrière l'autre à intervalles réguliers et sont maintenus sur celle-ci et aussi les uns aux autres au moyen d'une bande de maintien qui adhère à la bande de transport (47) dans au moins deux lignes (45, 46) parallèles espacées l'une à côté de l'autre, les FCP (29) étant séparés continuellement l'un après l'autre de la bande de transport (47) et de la bande de maintien puis, après la séparation, repris par au moins un dispositif de maintien intermédiaire (51) et retirés du dispositif de maintien intermédiaire (51) au moyen d'au moins un dispositif de transfert (52) et à chaque fois transférés dans une zone d'une ligne qui est approximativement transversale par rapport au sens de transport de la bande (14) et qui présente les surfaces de contact (33, 34 et 43, 44) des antennes (12, 13) correspondantes, sur la bande (14) qui supporte les antennes (12, 13), **en ce que** l'au moins un dispositif de transfert (52) présente pour chaque ligne (45, 46), munie de FCP (29), une roue (59 ou 58) à entraînement périphérique et l'axe central d'au moins une roue (58, 59) de l'au moins un dispositif de transfert est décalé d'un angle β dans le sens du pourtour par rapport à l'axe central du dispositif de maintien intermédiaire (51).

2. Procédé selon la revendication 1, **caractérisé en ce que** les IC (30) individuels, intégrés dans des boîtiers Flip-Chip (FCP, 29), sont enfoncés sur les surfaces de contact (33, 34) des antennes (12) au moyen de broches (56, 57) exerçant une pression sur leurs contacts (31, 32), extractibles et commandées par des cames, par exemple.

3. Procédé selon la revendication 1 ou 2, **caractérisé en ce qu'**en présence de FCP (29) présents au moins dans deux lignes (45, 46) parallèles espacées l'une de l'autre et d'au moins un tracé (35) avec un modèle d'antenne comportant des surfaces de contact (33, 34 et 43, 44) et alterné entre l'antenne (12) et l'antenne suivante (13), une antenne (12) est continuellement munie d'un FCP (29) provenant d'une ligne (45) et ensuite l'antenne suivante (13) est munie d'un FCP (29) provenant de l'autre ligne (46), et ce en alternance régulière.

4. Procédé selon la revendication 3, **caractérisé en ce qu'**un FCP (29) d'une ligne (45) peut être relié par ses contacts (31, 32) dans un passage continu avec les surfaces de contact (33, 34) associées d'une antenne (12) d'un modèle d'antenne d'un tracé (35) et un FCP (29) suivant de l'autre ligne (46) peut être relié par ses contacts avec les surfaces de contact (43, 44) associées de l'antenne suivante (13) de l'autre modèle d'antenne du même tracé (35).

5. Procédé selon l'une des revendications 1 à 4, **caractérisé en ce que** les bandes de transport (47) munies de FCP (29) disposés de préférence dans deux lignes parallèles (45, 46) sont déviées au moyen d'au moins un dispositif de transport (48), notamment un cylindre de transport (49), et les FCP (29) sont séparés de la bande de maintien et ainsi de la bande de transport (47) par poinçonnage au moyen d'un outil de poinçonnage du dispositif de transport (48) et sont repris par l'au moins un dispositif de maintien intermédiaire (51).

6. Procédé selon la revendication 1, **caractérisé en ce que** l'au moins un dispositif de maintien intermédiaire (51) présente un cylindre intermédiaire (53) qui est muni de dispositifs d'aspiration pour retenir sur le pourtour du cylindre les FCP (29) repris individuellement par l'au moins un dispositif de transport (48).

7. Procédé selon la revendication 6, **caractérisé en ce que** l'au moins un cylindre de transport (49) et l'au moins un cylindre intermédiaire (53) se trouvent avec leurs centres sur une ligne de liaison commune et sont au moins sensiblement en contact l'un avec l'autre.

8. Procédé selon la revendication 6 ou 7, **caractérisé en ce que** l'au moins un cylindre de transport (49) et l'au moins un cylindre intermédiaire (53) tournent en sens inverse l'un par rapport à l'autre à la même vitesse de rotation.

9. Procédé selon l'une des revendications 6 à 8, **caractérisé en ce que** l'au moins un cylindre de transport (49) et l'au moins un cylindre intermédiaire (53) présentent respectivement deux surfaces périphériques espacées l'une de l'autre pour deux lignes (45, 46) de FCP (29) associées.

10. Procédé selon l'une des revendications 1 à 9, **caractérisé en ce que** l'au moins un dispositif de transfert (52), après avoir repris un FCP (29) du dispositif de maintien intermédiaire (51) associé, est accéléré à une vitesse v2 supérieure avec laquelle la bande (14) est déplacée vers l'avant dans le sens du transport, puis est de nouveau ralenti à la vitesse v1 plus faible de l'au moins un dispositif de maintien intermédiaire (51) après avoir déposé un FCP (29) sur la bande (14).

11. Procédé selon l'une des revendications 1 à 10, **caractérisé en ce que** la roue (59 ou 58) correspondante du dispositif de transfert (52) est à chaque fois munie en un point du pourtour d'un dispositif d'aspiration pour retenir les FCP (29) individuels pris en charge depuis le dispositif de maintien intermédiaire (51) et de deux broches (56, 57) exerçant une pression sur les contacts (31, 32) des FCP (29), extractibles et commandées par des cames, par exemple, au moyen desquelles les contacts (31, 32) des FCP (29) sont enfoncés sur les surfaces de contact (33, 34 et 43, 44) des antennes (12, 13) associées.

12. Procédé selon la revendication 11, **caractérisé en ce que** les broches (56) de l'une des roues (58) sont décalées d'un angle périphérique d'environ 180° par rapport aux broches (57) de l'autre roue (59) de l'au moins un dispositif de transfert (52).

13. Procédé selon l'une des revendications 1 à 12, **caractérisé en ce que** l'axe central d'une roue (58) de l'au moins un dispositif de transfert (52) est décalé en avance dans le sens du pourtour d'un angle β1 par rapport à l'axe central de l'au moins un dispositif de maintien intermédiaire (51), notamment du cylindre intermédiaire (53), et l'axe central de l'autre roue (59) de l'au moins un dispositif de transfert (52) est décalé en retard dans le sens du pourtour d'un angle β2 par rapport à l'axe central de l'au moins un dispositif de maintien intermédiaire (51), notamment du cylindre intermédiaire (53) de telle sorte que la roue (58) reprenne tout d'abord un FCP (29) de la ligne (46) et, en alternance, l'autre roue (59) reprenne ensuite un FCP (29) de l'autre ligne (45) du dispositif de maintien intermédiaire (51).

14. Procédé selon la revendication 13, **caractérisé en ce que** l'angle de décalage β de chaque roue (58, 59) de l'au moins un dispositif de transfert (52) est de la même valeur.

15. Procédé selon la revendication 13 ou 14,
**caractérisé en ce que** l'angle de décalage β de chaque roue (58, 59) de l'au moins un dispositif de transfert (52) est au moins égal à environ un quart de l'espacement des FCP (29) de chaque ligne (45, 46).

16. Procédé selon l'une des revendications 1 à 15, **caractérisé en ce que** dans un passage continu, le FCP (29) d'une ligne (46) repris par une roue (58) de l'au moins un dispositif de transfert (52) est transféré sur une antenne (13) d'un modèle d'antenne d'un tracé (35) et ensuite un FCP (29) de l'autre ligne (45) repris par l'autre roue (59) du dispositif de transfert (52) est transféré sur une antenne suivante (12) de l'autre modèle d'antenne du même tracé (35), et ce selon une séquence alternée.

17. Procédé selon l'une des revendications 1 à 16, **caractérisé en ce que** les roues (58, 59) de l'au moins un dispositif de transfert (52) sont entraînées à des vitesses périphériques qui sont déphasées l'une de l'autre de 180° en plus de l'angle de décalage 2β.

18. Procédé selon l'une des revendications 5 à 17, **caractérisé en ce que** l'au moins un dispositif de transport (48), notamment le cylindre de transport (49) tourne et est entraîné à la même vitesse v1 que l'au moins un dispositif de maintien intermédiaire (51), notamment le cylindre intermédiaire (53).

19. Procédé selon l'une des revendications 1 à 18, **caractérisé en ce que** l'au moins une bande (14) est déplacée vers l'avant au moyen d'une bande de transport, d'un rouleau (54) ou similaire à une vitesse v2, laquelle est supérieure à la vitesse v1 de l'au moins un dispositif de maintien intermédiaire (51), notamment du cylindre intermédiaire (53).

20. Procédé selon la revendication 19, **caractérisé en ce que** la vitesse v2 de l'au moins une bande (14) est supérieure d'un facteur b à la vitesse v1 de l'au moins un dispositif de maintien intermédiaire (51), le facteur b étant déterminé à partir du rapport des écarts entre deux antennes (12) du même modèle d'antenne d'un tracé (35) avec l'écart des FCP (29) sur la bande de transport (47).

21. Procédé selon l'une des revendications 5 à 20, **caractérisé en ce que** l'au moins un cylindre de transport (49) et l'au moins un cylindre intermédiaire (53) sont entraînés au moyen d'un servomoteur (55), notamment un moteur pas à pas.

22. Procédé selon l'une des revendications 1 à 21, **caractérisé en ce que** les deux roues (58, 59) de l'au moins un dispositif de transfert (52) sont respectivement entraînées au moyen de servomoteurs (60, 61) indépendants l'un de l'autre, notamment des moteurs pas à pas, dont les phases sont synchronisées.

23. Procédé selon la revendication 21 ou 22, **caractérisé en ce que** tous les servomoteurs (55, 60, 61) sont commandés en fonction de la vitesse v2 de la bande (14) et synchronisés avec celle-ci.

24. Procédé selon l'une des revendications 1 à 23, **caractérisé en ce que** le transfert des FCP (29) sur les antennes (12, 13) d'un tracé (35) est surveillé à l'aide d'au moins une caméra (62, 63).
